# EUROPÄISCHE PATENTSCHRIFT

(11) **EP 4 204 178 B1**
(45) Veröffentlichungstag und Bekanntmachung des Hinweises auf die Patenterteilung: **10.12.2025**
(21) Anmeldenummer: 21755453.4
(22) Anmeldetag: 04.08.2021
(51) Int. Cl.: B23K 26/03, B23K 26/22, B23K 26/242, B23K 26/26, B23K 26/32, B23K 31/12, G01B 9/02, H02K 15/00, B23K 101/36, B23K 101/38, B23K 103/10, B23K 103/12

(54) **VERFAHREN ZUR ÜBERWACHUNG UND/ODER REGELUNG EINES LASERSCHWEISSPROZESSES ANHAND EINER OCT-ERFASSTEN SCHMELZ- ODER SCHWEISSPERLENGEOMETRIE SOWIE ZUGEHÖRIGE BEARBEITUNGSMASCHINE UND COMPUTERPROGRAMMPRODUKT**
METHOD FOR MONITORING AND/OR CONTROLLING A LASER WELDING PROCESS BASED ON AN OCT-DETECTED MELTING OR WELDING BEAD GEOMETRY, ASSOCIATED PROCESSING MACHINE, AND COMPUTER PROGRAM PRODUCT
PROCÉDÉ DE SURVEILLANCE ET/OU DE COMMANDE D'UN PROCESSUS DE SOUDAGE AU LASER SUR LA BASE D'UNE GÉOMÉTRIE DE CORDON DE SOUDURE OU DE FUSION DÉTECTÉE PAR OCT, MACHINE DE TRAITEMENT ASSOCIÉE, ET PRODUIT DE PROGRAMME INFORMATIQUE

(30) Priorität: 26.08.2020 DE 102020210778
(43) Veröffentlichungstag der Anmeldung: 05.07.2023
(73) Patentinhaber: TRUMPF Laser SE, 78713 Schramberg (DE)
(72) Erfinder: SPEKER, Nicolai, 74385 Pleidelsheim (DE); BOCKSROCKER, Oliver, 74343 Sachsenheim (DE); SAUTTER, Björn, 70437 Stuttgart (DE); HERMANI, Jan-Patrick, 71706 Markgröningen (DE)
(74) Vertreter: Trumpf Patentabteilung
(86) Internationale Anmeldenummer: PCT/EP2021/071747
(87) Internationale Veröffentlichungsnummer: WO 2022/043012

(56) Entgegenhaltungen:
- DE-A1- 102020 002 826
- DE-B3- 102016 001 661
- JP-A- 2004 222 458
- JP-A- 2006 021 214
- JP-A- 2014 238 387
- NATALIYA DEYNEKA-DUPRIEZ: "OCT f�r das Schwei�en von Hair Pins", LASER MAGAZIN, 1 May 2020 (2020-05-01), pages 14 - 16, XP093024554, Retrieved from the Internet <URL:http://lichtung.lessmueller.de/wp-content/uploads/2022/07/OCT-fuer-das-Schweissen-von-HP.pdf>

## Beschreibung

Die vorliegende Erfindung betrifft ein Verfahren zur Überwachung und/oder Regelung eines Laserschweißprozesses zum Verschweißen zweier Stableiter aus metallischem Werkstoff, insbesondere aus Kupfer oder Aluminium mittels eines Bearbeitungslaserstrahls, der auf nebeneinander angeordnete Endflächen der Stableiter gerichtet wird, um an den beiden End-flächen ein Schmelzbad und im weiteren Verlauf eine Schmelzperle aufzuschmelzen, die dann zu einer Schweißperle erstarrt. Vorzugsweise sind die Endflächen der Stableiter, auf die der Bearbeitungslaserstrahl gerichtet wird, jeweils auf gleicher Höhe nebeneinander angeordnet, siehe Anspruch 1. Die Erfindung betrifft auch eine zum Durchführen dieses Verfahrens geeignete Bearbeitungsmaschine und ein zugehöriges Computerprogrammprodukt, siehe Ansprüche 5 und 6. Kupferhaltige, gebogene Stableiter, insbesondere so genannte Hairpins, werden in elektrodynamischen Maschinen, wie Elektromotoren oder Generatoren, verbaut. Die Stableiter werden, entsprechend einer vorgesehenen elektrischen Verschaltung, angeordnet und miteinander verschweißt, um damit einen Elektromagneten aufzubauen. Ein Elektromotor verfügt dabei typischerweise über mehrere Dutzend, oft Hunderte von gebogenen Stableitern, die paarweise miteinander verschweißt werden müssen. Dabei ist es wichtig, mittels der Verschweißung eine ausreichende Querschnittsfläche zur Verfügung zu stellen, durch die der elektrische Strom von einem Stableiter in den anderen Stableiter fließen kann ("Anbindungsfläche"). Ist die Anbindungsfläche zu klein, drohen im Betrieb eine erhebliche ohmsche Erwärmung, eine Einbuße im Wirkungsgrad oder gar eine Unbrauchbarkeit der elektrodynamischen Maschine.

Das Verschweißen der Stableiter erfolgt mittels eines Laserstrahls, der dafür typischerweise auf die stirnseitigen Endflächen zweier nebeneinander angeordneter, meist aneinander anliegender Stableiter gerichtet wird. Die Endflächen werden durch die eingebrachte Wärme aufgeschmolzen und sind nach der Erstarrung über eine wieder erstarrte Schmelzperle miteinander verbunden. In der Regel wird der Laserstrahl stets mit der gleichen Leistung für die gleiche Zeit auf die Stableiter gerichtet, wodurch eine ausreichend große Anbindungsfläche erreicht wird.

Aufgrund von Verschmutzungen oder Rauigkeit an der Oberfläche der Stableiter kann jedoch die Reflektivität der Stableiter für den Laserstrahl schwanken, und dadurch auch der tatsächliche Energieeintrag. Ebenso kann durch Fehlpositionierungen der Stableiter, etwa Spalten oder Versatz, oder ungenauer Positionierung des Laserstrahls der tatsächliche Energieeintrag variieren. Bei zu geringem Energieeintrag wird zu wenig Material aufgeschmolzen, so dass eine zu kleine Schmelzperle entsteht, die eine zu geringe Anbindungsfläche zur Verfügung stellt. Auch im Falle von starker Spritzerbildung beim Laserschweißen kann eine zu kleine Schmelzperle mit zu geringer Anbindungsfläche entstehen. Erst durch zerstörende Prüfung oder durch Computertomografie(CT)- oder Röntgentechnik kann die Anbindungsfläche im Nachgang kontrolliert werden. Im Regelfall erfolgt daher eine Sichtkontrolle durch den Werker, oder es werden zyklisch Stichproben durch CT- oder Röntgentechnik ausgewertet. Eine Nacharbeit der fehlerhaften Teile ist sehr aufwendig.

Aus der DE 10 2014 226 710 A1 ist die Überwachung von Hairpins mittels Sensoren bekannt, welche die Ausdehnung des Schmelzbades messen und auf diese Weise erkennen können, ob der Schweißprozess in den vorgegebenen Grenzen abläuft. Darüber hinaus werden weitere Sensoren eingesetzt, welche die erstarrte Schweißnaht prüfen und gute von schlechten Nähten unterscheiden können.

Ferner sind aus der DE 10 2014 113 283 A1 Punkt-Abstandssensoren für ein koaxiales Messverfahren, insbesondere zur optischen Kohärenztomographie, bekannt, um zur Qualitätsüberprüfung einen Analysebereich auf dem Werkstück zu erfassen.

DE 10 2016 109 909 A1 beschreibt eine Vorrichtung zur Prozessüberwachung bei der Laserbearbeitung, insbesondere beim Laserschweißen und Lasertiefschweißen, mittels optischer Abstandsmessung. Die Abstandsmessung kann dabei beispielsweise durch optische Kohärenztomographie erfolgen.

Aus der JP 2004222458 A ist ein Schweißverfahren für Segmentleiter bekannt, bei dem ein Brenner in Positionen bewegt wird, die zum Schweißen von Segmentleitern geeignet sind, um eine schlechte Schweißnaht deutlich zu reduzieren.

Aus der JP 2014238387 A ist ein Schweißqualitätsprüfgerät bekannt, das die Schweißqualität an einer Schweißstelle mittels einer Bildaufnahme mit einer CCD-Kamera bestimmen kann, bei dem Endteile einer in einem Statorkern angeordneten Segmentspule miteinander verschweißt werden.

Aus der DE 10 2016 001 661 B3 ist eine Messvorrichtung für ein Bearbeitungssystem zum Bearbeiten eines Werkstücks mittels eines hochenergetischen Bearbeitungsstrahls entlang eines Hauptbearbeitungspfads, und eine Vorrichtung zum Bearbeiten und Überwachen eines Werkstücks sowie ein Verfahren zum Überwachen eines Werkstücks bekannt. Hierbei gelangt ein OCT-Scanner entlang eines Hauptbearbeitungspfads zum Einsatz.

Aus der DE 10 2020 002 826 A1 ist ein Verfahren zur Überwachung eines Laserschweißvorgangs entlang eines Hauptbearbeitungspfads mittels optischer Kohärenztomografie bekannt, wobei ein Bearbeitungslaser und eine Schweißoptik zum Fokussieren eines Laserstrahls in einer Hochrichtung auf einem zu schweißenden Bauteil bereitgestellt werden, wobei Licht von einem OCT-Sensor zur optischen Kohärenz-Tomografie durch die Schweißoptik hindurch in Richtung des Bauteils gelenkt wird. NATALIYA DEYNEKA-DUPRIEZ: "OCT für das Schweißen von Hair Pins",LASER MAGAZIN, 1. Mai 2020, Seiten 14-16 (XP093024554) beschreibt den Oberbegriff der Ansprüche 1 und 5.

Der vorliegenden Erfindung stellt sich die Aufgabe, ein Verfahren zur Überwachung des Laserschweißprozesses zum Verschweißen zweier Werkstücke anzugeben, welches einfach, schnell und zerstörungsfrei durchzuführen ist, sowie ein Verfahren zur Regelung des Laserschweißprozesses anzugeben, um eine stets ausreichend große Anbindungsfläche sicherzustellen.

Die Erfindung definiert ein Verfahren zur Überwachung und/oder Regelung eines Laserschweißprozesses zum Verschweißen zweier Werkstücke aus metallischem Werkstoff in Anspruch 1, eine Bearbeitungsmaschine zum Laserschweißen zweier Werkstücke aus metallischem Werkstoff in Anspruch 5, und einen Computerprogrammprodukt in Anspruch 6.

Weitere Ausführungsbeispiele sind in den abhängigen Ansprüchen definiert.

Ist der bestimmte Ist-Durchmesser der erstarrten Schmelzperle kleiner als der für eine perfekte Schmelzperle vorgegebene Soll-Durchmesser oder die Außenkontur der erstarrten Schmelzperle zu unrund, so ist die Anbindungsfläche der erstarrten Schmelzperle zu klein, und die Schmelzperle wird als defekt klassifiziert. Ist die bestimmte Ist-Höhe der erstarrten Schmelzperle kleiner als die für eine perfekte Schmelzperle vorgegebene Soll-Höhe oder weicht die bestimmte Ist-Wölbung der erstarrten Schmelzperle von der für eine perfekte Schmelzperle vorgegebenen, z.B. kugelkalottenförmigen Soll-Wölbung ab, wird die Schmelzperle als defekt klassifiziert. Weicht während des Laserschweißprozesses das bestimmte mindestens eine Ist-Geometriemerkmal des Schmelzbades oder der Schmelzperle vom vorgegebenen Soll-Geometriemerkmal ab, so kann über eine Änderung eines Schweißparameters gegengesteuert werden. Ist beispielsweise der bestimmte Ist-Durchmesser des Schmelzbades oder der Schmelzperle kleiner als der für den jeweiligen Messzeitpunkt vorgegebene Soll-Durchmesser, so kann durch eine Verlängerung des Schweißparameters "Schweißdauer" doch noch eine ausreichend große Anbindungsfläche der erstarrten Schweißperle erreicht werden.

Für den Fall einer als defekt klassifizierten Schweißperle kann die Schweißperle automatisch nachgeschweißt oder eine andere Aktion, insbesondere eine Warnmeldung, ausgelöst werden. Das unmittelbare Nachschweißen stellt keine aufwendige Nacharbeit von fehlerhaften Teilen dar.

Weitere Vorteile und vorteilhafte Ausgestaltungen des Gegenstands der Erfindung sind der Beschreibung, den Zeichnungen und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigen:

- Fig. 1: eine schematische Darstellung einer erfindungsgemäßen Bearbeitungsmaschine zum Laserschweißen zweier Stableiter; und
- Fign. 2a, 2b: die zu verschweißenden Endflächen zweier Stableiter mit einem aufgeschmolzenen Schmelzbad (Fig. 2a) und einer aufgeschmolzenen Schmelzperle (Fig. 2b); und
- Fig. 3: die miteinander verschweißten Endflächen zweier Stableiter mit einer erstarrten Schmelzperle.

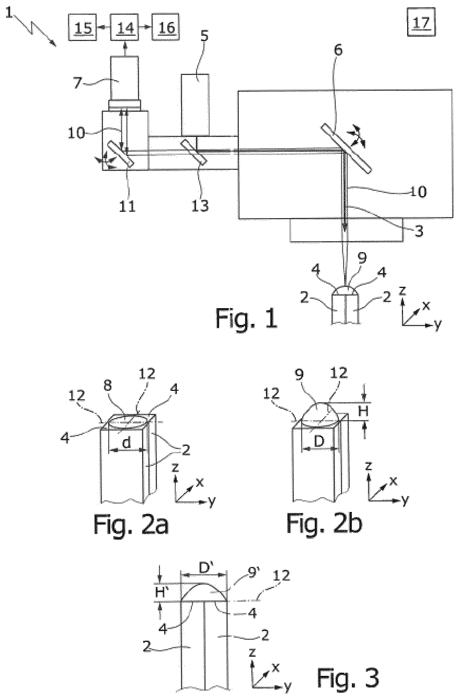

Die in **Fig. 1** schematisch gezeigte Bearbeitungsmaschine **1** dient zum Laserschweißen zweier Werkstücke aus metallischem Werkstoff, hier beispielhaft in Form zweier gebogener Stableiter **2** ("Hairpins") aus Kupfer, mittels eines Bearbeitungslaserstrahls **3.** Die beiden Stableiter 2 weisen die gleiche zu verschweißende Endfläche **4** mit gleichem Querschnitt auf und sind mit ihren Endflächen 4 auf gleicher Höhe nebeneinander angeordnet.

Die Laserbearbeitungsmaschine 1 umfasst einen Laserstrahlerzeuger **5** zum Erzeugen des Bearbeitungslaserstrahls 3, einen Laserscanner **6** zum zweidimensionalen Ablenken des Bearbeitungslaserstrahls 3 in x-, y-Richtung auf den Endflächen 4 der Werkstücke 2, sowie einen optischen Kohärenztomographen (OCT) **7** zum optischen Abtasten der Endflächen 4 der Werkstücke 2. Der Laserscanner 6 kann beispielsweise einen um zwei Achsen ablenkbaren Scannerspiegel oder zwei jeweils um eine Achse ablenkbare Scannerspiegel aufweisen.

Wie in **Fign. 2a, 2b** gezeigt, wird mittels des Bearbeitungslaserstrahls 3 an den beiden Endflächen 4 ein gemeinsames, zunächst ebenes Schmelzbad **8** aufgeschmolzen, aus dem sich im weiteren Schweißverlauf eine aufgeschmolzene Schmelzperle **9** entwickelt, die dann zu einer Schweißperle erstarrt. **Fig. 3** zeigt die beiden miteinander verschweißten Stableiter 2, deren Endflächen 4 über die erstarrte Schweißperle **9'** miteinander stoffschlüssig verbunden sind.

Der OCT 7 weist in bekannter Weise eine OCT-Lichtquelle (z.B. Superlumineszenzdiode) zur Erzeugung eines Lichtstrahls, einen OCT-Strahlteiler zum Aufteilen des Lichtstrahls in einen OCT-Messstrahl **10** und einen OCT-Referenzstrahl auf. Der OCT-Messstrahl 10 wird an einen Messarm weitergeleitet und trifft auf die Endflächen 4 der Werkstücke 2, an denen der OCT-Messstrahl 10 zumindest teilweise reflektiert und an den in dieser Richtung undurchlässigen oder teildurchlässigen OCT-Strahlteiler zurückgeführt wird. Der OCT-Referenzstrahl wird an einen Referenzarm weitergeleitet und am Ende des Referenzarms von einem Spiegel reflektiert. Der reflektierte OCT-Referenzstrahl wird ebenfalls an den OCT-Strahlteiler zurückgeführt. Die Überlagerung der beiden reflektierten Strahlen wird schließlich von einem Detektor (OCT-Sensor) detektiert, um unter Berücksichtigung der Länge des Referenzarms Höheninformationen über die Endflächen 4 der Werkstücke 2 zu ermitteln. Dieses Verfahren basiert auf dem Grundprinzip der Interferenz von Lichtwellen und ermöglicht es, Höhenunterschiede entlang der Messstrahlachse im Mikrometerbereich zu erfassen.

Im Strahlengang des OCT-Messstrahls 8 ist ein OCT-(Kleinfeld)Scanner **11** angeordnet, um den OCT-Messstrahl 10 auf den Endflächen 4 der Werkstücke 2 zweidimensional, also in x-, y-Richtung, abzulenken und so die Endflächen 4 der Werkstücke 2 mit einem oder mehreren Linienscans **12** (Fign. 2a, 2b) abzutasten. Der OCT-Scanner 11 kann beispielsweise einen um zwei Achsen ablenkbaren Scannerspiegel oder zwei jeweils um eine Achse ablenkbare Scannerspiegel aufweisen. Über einen Strahlteiler (z.B. in Form eines dichroitischen Spiegels) **13,** der im Strahlengang des Bearbeitungslaserstrahls 3 schräg angeordnet ist und für den Bearbeitungslaserstrahl 3 reflektierend und für den OCT-Messstrahl 10 transmittierend ist, wird der OCT-Messstrahl 10 - in den Nulllagen der beiden Scanner 6, 11 koaxial zum Bearbeitungslaserstrahl 3 - in den Laserscanner 6 eingekoppelt, um den OCT-Messstrahl 10 auf die Endflächen 4 der Werkstücke 2 zu richten.

Die Linienscandaten des OCTs 7 werden an eine Auswerteeinrichtung **14** weitergeleitet, die anhand des einen oder der mehreren Linienscans 12 eine Ist-Geometrie des Schmelzbades 8, der Schmelzperle 9 und der Schweißperle 9' bestimmt. Zusätzlich wird mindestens eines der folgenden Ist-Geometriemerkmale des Schmelzbades 8, der Schmelzperle 9 und der Schweißperle 9' als Ist-Geometrie bestimmt:
- Durchmesser **d** des Schmelzbades 8,
- Durchmesser **D,** Höhe **H** und/oder Wölbung der Schmelzperle 9, und
- Durchmesser **D',** Höhe **H'** der Schweißperle 9'

Die bestimmte Ist-Geometrie des Schmelzbads 8 und der Schmelzperle 9 wird an eine Einstelleinrichtung **15** weitergeleitet, die einen Schweißparameter, wie z.B. die Schweißdauer, anhand einer Abweichung der bestimmten Ist-Geometrie von einer vorgegebenen Soll-Geometrie des Schmelzbads 8 und der Schmelzperle 9 entsprechend entstellt, insbesondere regelt. Ist beispielsweise der bestimmte Ist-Durchmesser d, D des Schmelzbades 8 oder der Schmelzperle 9 kleiner als der für den jeweiligen Messzeitpunkt vorgegebene Soll-Durchmesser, so kann durch eine Verlängerung der Schweißdauer doch noch eine ausreichend große Anbindungsfläche der erstarrten Schweißperle 9' erreicht werden.

Die bestimmte Ist-Geometrie der erstarrten Schweißperle 9' wird an eine Überwachungseinrichtung **16** weitergeleitet, die die Qualität der Schweißperle 9 anhand einer Abweichung der bestimmten Ist-Geometrie von einer vorgegebenen Soll-Geometrie der Schweißperle 9' überwacht. Liegt die Abweichung außerhalb einer vorgegebenen Toleranz, wird die Schweißperle 9' als defekt klassifiziert, und die verschweißten Stableiter 2 werden aussortiert. Im Falle einer zu kleinen Anbindungsfläche kann auch unmittelbar nachgeschweißt werden, bis die Anbindungsfläche innerhalb der Toleranzen liegt, da sich die verschweißten Stableiter 2 noch in der Schweißposition befinden.

Eine Maschinensteuerung **17** steuert die Bewegung der Scanner 6, 11 und ist programmiert, während und/oder nach dem Laserschweißprozess den OCT-Scanner 11 anzusteuern, um die Endflächen 4 der Werkstücke 2 mittels des OCT-Messstrahls 10 in einem oder mehreren Linienscans 12 abzutasten.

## Patentansprüche

1. Verfahren zur Überwachung und/oder Regelung eines Laserschweißprozesses zum Verschweißen zweier Stableiter (2) aus metallischem Werkstoff, mittels eines Bearbeitungslaserstrahls (3), der auf nebeneinander angeordnete Endflächen (4) der Stableiter (2) gerichtet wird, um an den beiden Endflächen (4) ein Schmelzbad (8) und im weiteren Verlauf eine Schmelzperle (9) aufzuschmelzen, die dann zu einer Schweißperle (9') erstarrt,
**dadurch gekennzeichnet, dass**
während des Laserschweißprozesses das flüssige Schmelzbad (8) mittels eines OCT-Messstrahls (10) in mindestens zwei zueinander rechtwinkligen Linienscans (12) abgetastet, eine Rundheit des Schmelzbads (8) anhand der Linienscans (12) bestimmt und mindestens ein Schweißparameter anhand einer Abweichung der bestimmten Rundheit des Schmelzbads (8) von einem vorgegebenen Soll-Wert für die Rundheit des Schmelzbads (8) eingestellt wird, und
nach dem Laserschweißprozess die erstarrte Schweißperle (9') mittels eines OCT-Messstrahls (10) in mindestens zwei zueinander rechtwinkligen Linienscans (12) abgetastet, ein Durchmesser (D') und eine Wölbung der Schweißperle (9')anhand der Linienscans (12) bestimmt und die Qualität der Schweißperle (9') anhand einer Abweichung des bestimmten Durchmessers (D') und der bestimmten Wölbung von jeweils vorgegebenen Soll-Werten für den Durchmesser (D') und die Wölbung der Schweißperle (9') überwacht wird.

2. Verfahren nach Anspruch 1, **dadurch gekennzeichnet, dass** zusätzlich mindestens eines der folgenden Ist-Geometriemerkmale des Schmelzbades (8), der Schmelzperle (9) und/oder der Schweißperle (9') anhand der Linienscans (12) bestimmt wird:
- Durchmesser (d) des Schmelzbades (8),
- Durchmesser (D), Höhe (H) und/oder Wölbung der Schmelzperle (9), und
- Höhe (H') der Schweißperle (9').

3. Verfahren nach einem der vorhergehenden Ansprüche, **dadurch gekennzeichnet, dass** für den Fall einer als defekt klassifizierten Schweißperle (9') die Schweißperle (9') automatisch nachgeschweißt oder eine andere Aktion, insbesondere eine Warnmeldung, ausgelöst wird.

4. Verfahren nach einem der vorhergehenden Ansprüche, **dadurch gekennzeichnet, dass** der mindestens eine geänderte Schweißparameter die Schweißdauer ist.

5. Bearbeitungsmaschine (1) zum Laserschweißen zweier Stableiter (2) aus metallischem Werkstoff mittels eines Bearbeitungslaserstrahls (3),
mit einem Laserstrahlerzeuger (5) zum Erzeugen des Bearbeitungslaserstrahls (3),
mit einem Laserscanner (6) zum zweidimensionalen Ablenken des Bearbeitungslaserstrahls (3) auf nebeneinander liegende Endflächen (4) zweier Stableiter (2), um an den beiden Endflächen (4) ein Schmelzbad (8) und im weiteren Verlauf eine Schmelzperle (9) aufzuschmelzen, die dann zu einer Schweißperle (9') erstarrt,
mit einem optischen Kohärenztomographen (7) zum Erzeugen eines OCT-Messstrahls (8), der von dem Laserscanner (6) auf die beiden Endflächen (4) gerichtet wird,
mit einem zwischen Kohärenztomograph (7) und Laserscanner (6) angeordneten OCT-Scanner (11) zum zweidimensionalen Ablenken des OCT-Messstrahls (10) auf den beiden Endflächen (4), um das Schmelzbad (8), die Schmelzperle (9) und/oder die Schweißperle (9') mittels des OCT-Messstrahls (10) in mindestens zwei zueinander rechtwinkligen Linienscans (12) abzutasten, mit einer Maschinensteuerung (17) zum Ansteuern des Laserscanners (6) und des OCT-Scanners (11),
mit einer Auswerteeinrichtung (14) zum Bestimmen einer Rundheit des Schmelzbades (8) und eines Durchmessers (D') und einer Wölbung der Schweißperle (9')Schweißperle (9') anhand der Linienscans (12),
mit einer Einstelleinrichtung (15) zum Einstellen mindestens eines Schweißparameters anhand einer Abweichung der bestimmten Rundheit von einem vorgegebenen Soll-Wert für die Rundheit des Schmelzbads (8), und
mit einer Überwachungseinrichtung (16) zum Überwachen der Qualität der Schweißperle (9') anhand einer Abweichung des bestimmten Durchmessers (D') und der bestimmten Wölbung von jeweils vorgegebenen Soll-Werten für den Durchmesser (D') und die Wölbung der Schweißperle (9'),
wobei die Maschinensteuerung (17) programmiert ist, während und nach dem Laserschweißprozess den OCT-Scanner (11) anzusteuern, um die Endflächen (4) der Stableiter (2) mittels des OCT-Messstrahls (10) in mindestens zwei zueinander rechtwinkligen Linienscans (12) abzutasten.

6. Computerprogrammprodukt, welches Codemittel aufweist, die zum Durchführen aller Schritte des Verfahrens nach einem der Ansprüche 1 bis 4 angepasst sind, wenn das Programm auf einer Maschinensteuerung (17) der Bearbeitungsmaschine (1) nach Anspruch 5 abläuft.

## Claims

1. A method for monitoring and/or controlling a laser welding process for welding two rod conductors (2), made of a metallic material, by means of a processing laser beam (3) that is directed at end faces (4) of the rod conductors (2), the end faces being arranged next to one another, in order to melt a melt pool (8), and later on a melt bead (9), on the two end faces (4), the melt bead then solidifying to form a weld bead (9'),
**characterized in that**
during the laser welding process, the liquid melt pool (8) is scanned, by means of an OCT measurement beam (10), in at least two line scans (12) that are at right angles relative to one another, a roundness of the melt pool (8) is determined based on the line scans (12), and at least one welding parameter is adjusted based on a deviation of the determined roundness of the melt pool (8) from a predefined target value for the roundness of the melt pool (8), and
after the laser welding process, the solidified weld bead (9') is scanned, by means of an OCT measurement beam (10), in at least two line scans (12) that are at right angles relative to one another, a diameter (D') and a curvature of the weld bead (9') is determined based on the line scans (12), and the quality of the weld bead (9') is monitored based on a deviation of the determined diameter (D') and the determined curvature from respective predefined target values for the diameter (D') and the curvature of the weld bead (9').

2. The method according to claim 1, **characterized in that** in addition at least one of the following actual geometry features of the melt pool (8), the melt bead (9') and/or the weld bead (9') is determined based on the line scans (12):
- the diameter (d) of the melt pool (8),
- the diameter (D), height (H) and/or curvature of the melt bead (9), and
- the height (H') of the weld bead (9').

3. The method according to any of the preceding claims, **characterized in that**, for the case of a weld bead (9') classified as defective, the weld bead (9') is automatically re-welded or another action is triggered, in particular a warning message.

4. The method according to any of the preceding claims, **characterized in that** the at least one changed welding parameter is the welding duration.

5. A processing machine (1) for the laser welding of two rod conductors (2), which are made of a metallic material, by means of a processing laser beam (3), the processing machine comprising
a laser beam generator (5) for generating the processing laser beam (3),
a laser scanner (6) for deflecting the processing laser beam (3) two-dimensionally onto end faces (4) of two rod conductors (2), the end faces lying next to one another, in order to melt a melt pool (8), and later on a melt bead (9), on the two end faces (4), the bead then solidifying to form a weld bead (9'),
an optical coherence tomography machine (7) for generating an OCT measurement beam (8) that is directed from the laser scanner (6) to the two end faces (4),
an OCT scanner (11), arranged between the coherence tomography machine (7) and the laser scanner (6), for deflecting the OCT measurement beam (10) two-dimensionally onto the two end faces (4) in order to scan, in at least two line scans (12) that are at right angles relative to one another, the melt pool (8), the melt bead (9) and/or the weld bead (9') by means of the OCT measurement beam (10),
a machine controller (17) for actuating the laser scanner (6) and the OCT scanner (11),
an evaluation device (14) for determining a roundness of the melt pool (8) and a diameter (D') and a curvature of the weld bead (9') based on the line scans (12),
an adjustment device (15) for adjusting at least one welding parameter based on a deviation of the determined roundness from a predefined target value for the roundness of the melt pool (8), and a monitoring device (16) for monitoring the quality of the weld bead (9') based on a deviation of the determined diameter (D') and the determined curvature from respective predefined target values for the diameter (D') and the curvature of the weld bead (9'),
wherein the machine controller (17) is programmed to actuate the OCT scanner (11) during and after the laser welding process in order to scan the end faces (4) of the rod conductors (2) by means of the OCT measurement beam (10) in at least two line scans (12) that are at right angles relative to one another.

6. A computer program product having code means adapted to carry out all the steps of the method according to any of claims 1 to 4 when the program is executed on the machine controller (17) of the processing machine (1) according to claim 5.

## Revendications

1. Procédé de surveillance et/ou de régulation d'un procédé de soudage laser de deux barres conductrices (2) en matériau métallique, à souder au moyen d'un faisceau laser de traitement (3) dirigé sur des faces d'extrémité (4) adjacentes des barres conductrices (2) afin de faire fondre un bain de fusion (8) sur les deux faces d'extrémité (4), puis un cordon de fusion (9), qui se solidifie ensuite en un cordon de soudure (9'),
**caractérisé en ce que**
pendant le procédé de soudage laser, le bain de fusion (8) liquide est balayé par un faisceau de mesure OCT (10), selon au moins deux balayages linéaires (12) perpendiculaires entre eux, la circularité du bain de fusion (8) est déterminée sur la base des balayages linéaires (12), et au moins un paramètre de soudage est réglé à partir de l'écart entre la circularité déterminée du bain de fusion (8) et une valeur cible prédéterminée pour la circularité du bain de fusion (8), et
après le procédé de soudage laser, le cordon de soudure (9') solidifié est balayé au moyen d'un faisceau de mesure OCT (10) selon au moins deux balayages linéaires (12) perpendiculaires entre eux, un diamètre (D') et une courbure du cordon de soudure (9') sont déterminés sur la base des balayages linéaires (12), et la qualité du cordon de soudure (9') est surveillée sur la base d'un écart du diamètre (D') déterminé et de la courbure déterminée par rapport à des valeurs cibles prédéterminées respectives pour le diamètre (D') et la courbure du cordon de soudure (9').

2. Procédé selon la revendication 1, **caractérisé en ce qu'**au moins l'une des caractéristiques géométriques réelles suivantes du bain de fusion (8), du cordon de fusion (9) et/ou du cordon de soudure (9') est en outre déterminée sur la base des balayages linéaires (12) :
- diamètre (d) du bain de fusion (8),
- diamètre (D), hauteur (H) et/ou courbure du cordon de fusion (9), et
- hauteur (H') du cordon de soudure (9').

3. Procédé selon l'une des revendications précédentes, **caractérisé en ce que**, dans le cas d'un cordon de soudure (9') classé comme défectueux, le cordon de soudure (9') est ressoudé automatiquement ou une autre action est déclenchée, en particulier l'envoi d'un message d'avertissement.

4. Procédé selon l'une des revendications précédentes, **caractérisé en ce que** ledit au moins un paramètre de soudage modifié est la durée de soudage.

5. Machine de traitement (1) pour le soudage laser de deux barres conductrices (2) en matériau métallique au moyen d'un faisceau laser de traitement (3),
avec un générateur de faisceau laser (5) pour générer le faisceau laser de traitement (3), comportant
un scanner laser (6) pour dévier bidimensionnellement le faisceau laser de traitement (3) sur les faces d'extrémité adjacentes (4) de deux barres conductrices (2) afin de faire fondre sur les deux faces d'extrémité (4) un bain de fusion (8) puis un cordon de fusion (9), qui se solidifie ensuite en un cordon de soudure (9'),
un tomographe à cohérence optique (7) pour générer un faisceau de mesure OCT (8) qui est dirigé par le scanner laser (6) sur les deux faces d'extrémité (4),
un scanner OCT (11) agencé entre le tomographe à cohérence (7) et le scanner laser (6) pour dévier bidimensionnellement le faisceau de mesure OCT (10) sur les deux faces d'extrémité (4) afin de balayer le bain de fusion (8), le cordon de fusion (9) et/ou le cordon de soudure (9') au moyen du faisceau de mesure OCT (10) selon au moins deux balayages linéaires (12) perpendiculaires entre eux, avec une commande de machine (17) pour commander le scanner laser (6) et le scanner OCT (11),
un dispositif d'évaluation (14) destiné à déterminer la circularité du bain de fusion (8) ainsi que le diamètre (D') et la courbure du cordon de soudure (9') sur la base des balayages linéaires (12),
un dispositif de réglage (15) permettant de régler au moins un paramètre de soudage sur la base de l'écart entre la circularité déterminée et une valeur cible prédéterminée pour la circularité du bain de fusion (8), et
un dispositif de surveillance (16) destiné à surveiller la qualité du cordon de soudure (9') sur la base de l'écart entre d'une part le diamètre (D') déterminé et la courbure déterminée, et d'autre part des valeurs cibles prédéterminées pour le diamètre (D') et la courbure du cordon de soudure (9'),
dans lequel la commande de machine (17) est programmée pour commander le scanner OCT (11) pendant et après le processus de soudage laser afin de balayer les faces d'extrémité (4) des barres conductrices (2) au moyen du faisceau de mesure OCT (10) selon au moins deux balayages linéaires (12) perpendiculaires entre eux.

6. Produit logiciel comportant des moyens de codage adaptés pour exécuter toutes les étapes du procédé selon l'une quelconque des revendication 1 à 4 lorsque le logiciel est exécuté sur une commande de machine (17) de la machine de traitement (1) selon la revendication 5.
